# DEMANDE DE BREVET EUROPEEN

(11) **EP 2 043 322 A1**
(43) Date de publication de la demande: **01.04.2009**
(21) Numéro de dépôt: 07301392.2
(22) Date de dépôt: 25.09.2007
(51) Int. Cl.: H04L 29/06

(54) **Procédé et objet pour extraire un contenu à caractère publicitaire à partir d'un message émis dans un réseau de radiocommunication**

(71) Demandeur: GEMPLUS, 13420 Gémenos (FR)
(72) Inventeur: Halle, David, 83200, TOULON (FR); Foesser, Christophe, 13600, LA CIOTAT (FR); Mallet, Lionel, 13007, MARSEILLE (FR); Faure, Frédéric, 13260, CASSIS (FR); Brun, Alain GEMPLUS, 13400, AUBAGNE (FR)

(57) **Abrégé**

Pour diffuser des contenus publicitaires (C1, C3) correspondant aux centres d'intérêts d'un utilisateur d'un objet communicant(1a, 1b) , il est prévu un procédé pour élaborer un message (M) comprenant au moins un contenu publicitaire (C1, C2, ..., Cn) associé à au moins une méta-information (MC1, MC2, ... MCn) caractérisant le sujet concerné par le contenu publicitaire, un procédé mis en oeuvre par l'objet pour extraire du message (M) un contenu publicitaire (C1, C3) si et seulement si la méta-information du contenu (MC1, MC3) correspond à une méta-information (MCE2, MCEm) caractérisant un centre d'intérêt de l'utilisateur.

## Description

L'invention concerne un procédé, un objet, pour extraire un contenu à caractère publicitaire à partir d'un message émis depuis un serveur de téléchargement de données, à travers un réseau préférentiellement de radiocommunication ou filaire (type ADSL, liaison spécialisée...). Ledit message est destiné à des objets communicants portables par exemple dans un réseau de radiotéléphonie. En particulier, les objets communicants sont des cartes à puce, telles que des cartes SIM (Subscriber Identity Module), introduites dans des terminaux radiotéléphoniques. L'invention pourrait toutefois s'appliquer à d'autres domaines tels que la télévision mobile ou à toute autre application dans laquelle un opérateur d'un réseau souhaite diffuser des messages publicitaires au moyen du réseau qu'il opère. L'invention concerne en outre un procédé d'élaboration d'un message contenant des contenus publicitaires.

Le serveur de téléchargement de données, également appelé plateforme d'administration de cartes OTA (Over The Air), comprend un logiciel qui permet à l'opérateur gérant le réseau de radiocommunications de conserver le contrôle des cartes à puce dans les terminaux mobiles et de modifier leur contenu. Ces opérations à l'initiative de l'opérateur (mode push) concernent par exemple le téléchargement d'un fichier dans des cartes prédéterminées du parc géré par l'opérateur, ou le téléchargement ou l'effacement d'une application déterminée, ou bien la modification de données d'un fichier ou d'une application déterminée dans des cartes gérées par l'opérateur, ou encore de diffuser de la publicité.

Les données à télécharger dans les cartes à puce sont souvent transmises à travers un serveur de messages courts. Plusieurs messages courts sont bien souvent nécessaires pour télécharger une application ou un fichier.

L'invention s'intéresse plus particulièrement à la gestion d'une campagne de téléchargement de données à caractère publicitaire pour adresser massivement des cartes d'utilisateur par le serveur de téléchargement de données OTA.

L'opérateur a actuellement deux possibilités pour télécharger de la publicité depuis le serveur OTA.

Selon une première solution, l'opérateur réalise une campagne unique (dite large) à destination de l'ensemble de la flotte des terminaux radiotéléphoniques mobiles. Cette solution conduit toutefois à déployer des messages contenant de la publicité non ciblée à l'ensemble des abonnés, publicité non efficacement exploitée car ne correspondant pas aux attentes ou centres d'intérêt desdits abonnés. En outre, les campagnes de téléchargement dites larges ne permettent en moyenne de toucher que 60% d'abonnés (leur téléphone devant être « sous couverture » c'est à dire accessible au moment où est réalisée la campagne).

Selon une deuxième possibilité, l'opérateur décide de consulter son centre de gestion de la relation client (Customer Relashionship Management - CRM) pour déterminer des groupes d'abonnés ayant certaines caractéristiques communes. Pour chaque groupe ainsi constitué, l'opérateur déclenche des campagnes de téléchargement de messages ciblés à destination desdits abonnés. Cette solution est couteuse en ressources pour l'opérateur et reste peu efficace. En effet, la granularité des centres d'intérêts au sein d'un groupe reste peu fine. Cela peut également conduire à une certaine saturation du réseau notamment des centres de gestion des messages courts (SMSC) de part la multiplication des campagnes.

L'invention a pour but de remédier aux inconvénients des solutions actuelles en permettant le déploiement d'une campagne large (non ciblée) donc peu couteuse et simple à mettre en oeuvre tout en réalisant une extraction fine des contenus à caractère publicitaire correspondant aux centres d'intérêt de chaque abonné, par la mise en oeuvre d'un procédé d'extraction au niveau du téléphone portable, préférentiellement au niveau de la carte SIM.

A cette fin, il est prévu un objet électronique communicant adapté pour recevoir à travers un réseau de communication un message comprenant au moins un contenu publicitaire et au moins une méta-information associée au dit contenu publicitaire pour caractériser le sujet sur lequel porte le contenu publicitaire, l'objet étant caractérisé en ce qu'il comporte :
- des moyens pour exploiter au moins une méta-information définissant un centre d'intérêt d'un utilisateur ;
- des moyens pour extraire du message un contenu publicitaire si et seulement si une méta-information caractérisant le contenu publicitaire correspond à une méta-information définissant un centre d'intérêt de l'utilisateur.

Selon une première variante, l'objet électronique comprend en outre des moyens pour mémoriser la au moins une méta-information définissant un centre d'intérêt d'un utilisateur de l'objet et des moyens pour accéder à ladite au moins une méta-information mémorisée.

Dans un mode de réalisation, l'objet électronique communicant est en un terminal mobile dans un réseau de radiotéléphonie. Dans un autre mode de réalisation l'objet est une carte SIM introduite dans terminal mobile dans un réseau de radiotéléphonie ou plus généralement un dispositif électronique (1b) mis en liaison avec un terminal.

L'objet électronique peut comporter en outre des moyens pour établir ladite au moins une méta-information définissant un centre d'intérêt de l'utilisateur en exploitant par exemple les caractéristiques de l'abonnement de l'utilisateur ou les favoris définis par l'utilisateur durant les phases navigations au travers de menus mis à disposition par l'objet communicant.

Selon une deuxième variante, l'objet comporte en outre des moyens consommateurs de contenus publicitaires pour activer les moyens pour extraire un contenu publicitaire et pour réaliser une fonction de rendu visuel, sonore, olfactif, tactile et/ou gustatif ou une fonction de mémorisation du contenu extrait.

Selon une troisième variante, l'objet comporte des moyens pour mémoriser les messages.

Il est également prévu un procédé d'extraction de contenus publicitaires délivrés sous la forme d'un message comprenant au moins un contenu publicitaire, au moins une méta-information associée au contenu publicitaire pour caractériser le sujet sur lequel porte le contenu publicitaire, le procédé étant caractérisé en ce qu'il comprend les étapes de
- récupérer une méta-information d'un contenu publicitaire du message ;
- comparer ladite méta-information à au moins une méta-information définissant un centre d'intérêt d'un utilisateur ;
- extraire du message et ainsi délivrer un contenu publicitaire si et seulement si une méta-information caractérisant le contenu publicitaire correspond à une méta-information définissant un centre d'intérêt de l'utilisateur.

Selon l'invention, le procédé d'extraction peut être mis en oeuvre par un objet électronique tel que décrit auparavant.

Selon l'invention, il est en outre prévu un procédé pour élaborer un message comprenant au moins un contenu publicitaire caractérisé en ce qu'il comporte une étape d'ajouter au message au moins une méta-information par contenu publicitaire pour caractériser le sujet sur lequel porte ledit contenu.

D'autres caractéristiques et avantages apparaîtront plus clairement à la lecture de la description qui suit et à l'examen des figures qui l'accompagnent parmi lesquelles :
- la figure 1 présente l'architecture fonctionnelle d'un objet électronique communicant selon l'invention ;
- la figure 2 décrit les étapes d'un procédé pour extraire un contenu publicitaire selon l'invention.

Bien que l'invention ait été décrite selon des réalisations préférées en référence à un réseau de radiocommunication entre un terminal radiotéléphonique mobile et le réseau fixe du réseau de radiotéléphonie, le procédé selon l'invention peut être mis en oeuvre dans tout objet électronique utilisé par un utilisateur ou abonné pour lequel un opérateur souhaite susciter chez ledit utilisateur une action à la suite d'une publicité en lien avec l'un de ses centres d'intérêt.

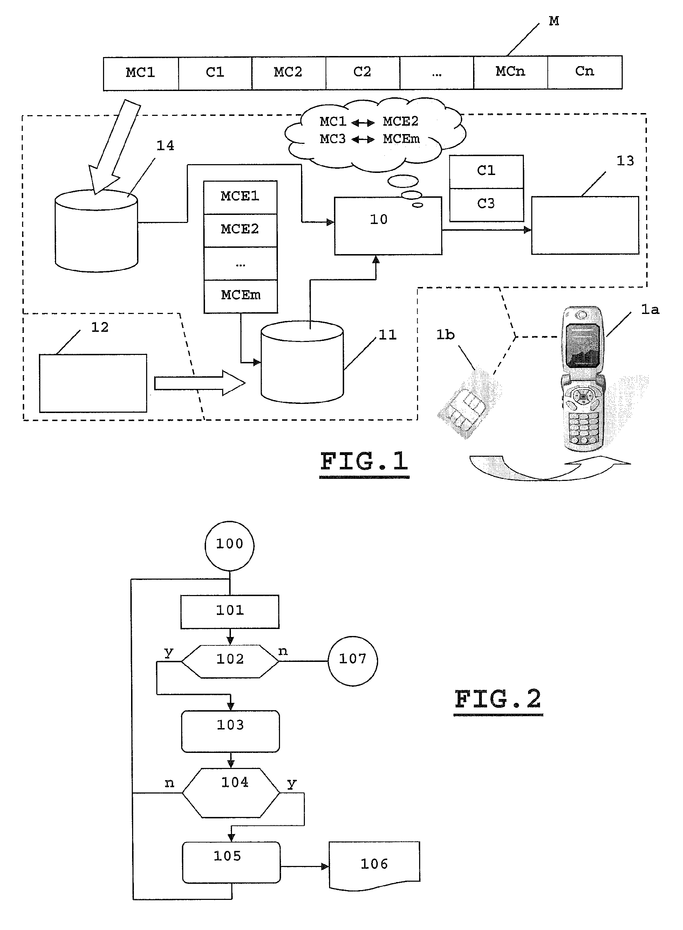

Dans la figure 1, un message M comporte un ensemble de contenus publicitaires C1, C2... Cn. Selon l'invention, ce message est enrichi suivant un procédé dans lequel on associe à chaque contenu publicitaire considéré une ou plusieurs méta-informations pour caractériser le sujet sur lequel porte ledit contenu. Ainsi il est possible de caractériser par la méta-information « mountain » un contenu publicitaire relatif à des vêtements de randonnées en montagne. Il est également possible d'associer une autre méta-information telle que « climbing » ou même « snow » s'il est souhaitable de viser préférentiellement les adeptes de vêtements de randonnée en haute montagne. De la même manière en saison estivale une méta-information « sea » ou « sail » pourra caractériser une publicité pour des tenues de bain ou accessoires pour véliplanchistes. En liaison avec la figure 1, à titre d'exemple et de manière non limitative les méta-informations MC1, MC2, MCn caractérisent respectivement les contenu C1, C2 et Cn. Dans le cadre de l'invention, un message élaboré selon le procédé revendiqué est par la suite diffusé par exemple au moyen d'une plateforme OTA (Over The Air) via un réseau de radiocommunication. Le message est ainsi transmis sans distinction vers l'ensemble d'une flotte de terminaux radiophoniques mobiles, tels l'objet 1a. Préférentiellement, le message est adressé via les terminaux aux cartes d'abonnés dites SIM (Subscriber Identity Module) telles 1b, cartes SIM insérées dans les terminaux. Le message M est transmis par exemple au moyen de messages courts. Selon l'invention, il est prévu un objet communicant adapté pour lire le message M. Pour maximiser l'impact de la campagne publicitaire, la publicité doit être ciblée. Selon l'invention, il est utile de caractériser les centres d'intérêt de chacun. A ce titre, l'objet selon l'invention dispose d'au moins une méta-information précisant un centre d'intérêt. Nous pouvons imaginer qu'un abonné et utilisateur d'un terminal radiotéléphonique soit particulièrement intéressé par la voile et la musique et même plus précisément par la guitare. Les méta-informations « sail », « music » et « guitar » sont donc préétablies (ou déterminées comme nous le verrons ultérieurement). Lesdites méta-informations caractérisant les centres d'intérêt de l'utilisateur sont mises à disposition du terminal ou de la carte SIM. Ces méta-informations sont référencées en liaison avec la figure 1 par MCE1, MCE2,...,MCEm.

Dans l'exemple illustré au moyen de la figure 1, le message comprend notamment les contenus C1 et C3 pour lesquelles les méta-informations contenues dans le message concordent avec les méta-informations MCE2 et MCEm caractérisant des centres d'intérêts de l'utilisateur du terminal 1a. Des moyens 10 sont aptes à sélectionner les contenus C1 et C3 parmi l'ensemble des contenus du message M. En effet, le contenu C2 associé à la méta-information MC2 ne trouve aucune équivalence ni concordance dans l'ensemble des méta-informations MCE1 à MCEm. Le contenu C2 est donc ignoré et non délivré. Selon une première variante, l'objet 1a ou 1b comprend une mémoire 11 pour mémoriser l'ensemble des méta-informations relatives aux centres d'intérêt de l'utilisateur de l'objet 1a. Selon une autre variante, l'objet 1a ou 1b, comprend également des moyens 13 consommateurs de contenus publicitaire. En effet, pour pouvoir visualiser un contenu sur l'écran d'un terminal par exemple ou l'écouter, les moyens 13 réalisent le rendu visuel, sonore ou peuvent mémoriser les contenus extraits par les moyens 10 dans une mémoire, mémoire non représentée sur la figure 1. Les moyens 13 peuvent avoir également pour fonction d'activer les moyens 10 pour extraire les contenus d'un message M. Selon un autre mode de réalisation, un message M peut être préalablement mémorisé à l'aide d'une mémoire 14 avant d'être analysé par les moyens d'extraction 10. Selon l'invention il est ainsi possible de constituer une banque de messages M avant extraction. Il est possible aussi de constituer une banque de contenus extraits avant leur visualisation, écoute ou plus généralement leur rendu.

Selon l'invention, il est possible de définir lors de l'acquisition de l'objet par son utilisateur, la liste des méta-informations relatives aux centres d'intérêt de l'utilisateur. Il est également possible de préétablir une liste de méta-informations relatives aux solutions, produits ou services de l'opérateur afin, qu'indépendamment des préférences de l'utilisateur, des contenus publicitaires propres à l'opérateur puissent être visualisés ou écoutés. La liste de ces méta-informations est préétablie et inscrite dans la mémoire 11 du terminal 1a ou préférentiellement de la carte 1b. Il existe une autre possibilité permettant d'établir dynamiquement cette liste. Il est ainsi possible au niveau du réseau (voire du CRM) ou directement au sein de l'objet selon l'invention, de prévoir des moyens 12 pour maintenir à jour les méta-informations MCEm en fonction de différents paramètres. Il peut être envisagé que les moyens 12 exploitent les caractéristiques propres à l'abonnement de l'utilisateur ou bien l'historique ou les favoris suite aux phases de navigation réalisées par l'utilisateur de l'objet.

De manière non limitative, il est prévu selon l'invention d'élaborer un message M, écrit en langage XML (eXtensible Markup Language) comme suit : 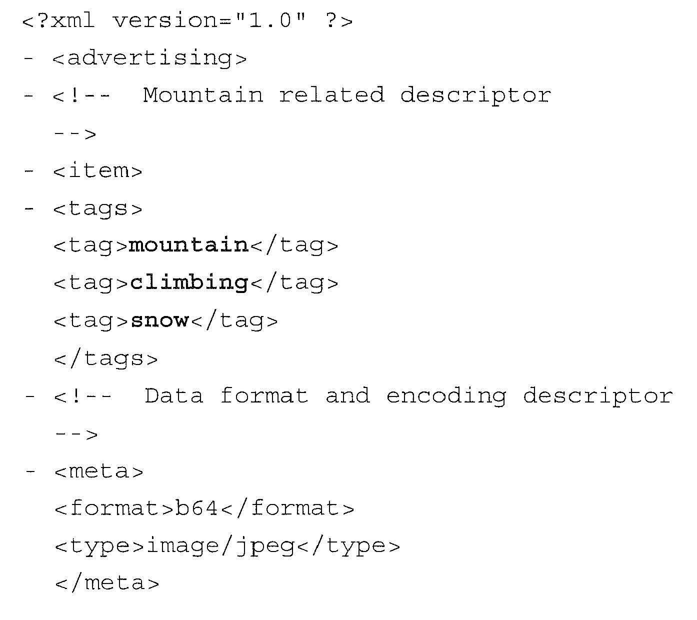 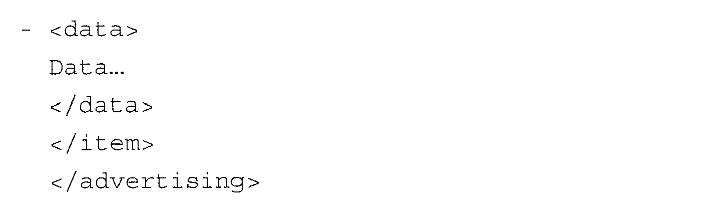 Les méta-informations « **mountain** », « **climbing** », « **snow** » illustrent un contenu publicitaire associé à une image au format jpeg (Join Photographic Experts Group). Le choix des méta-informations associées aux contenus peut se faire via des lexiques ou résulter d'accords avec des annonceurs fournisseurs de contenus.

En liaison avec la figure 2, un procédé d'extraction selon l'invention comprend les étapes suivantes. A l'étape 100, un indice i est initialisé à la valeur 0. Cet indice permet de traiter les i contenus publicitaires d'un message M tel que présenté en figure 1.

L'indice i est incrémenté d'une unité à l'étape 101. Le procédé vérifie à l'étape 102 que le message comporte un ième contenu publicitaire. Si le message a été intégralement examiné, le procédé se termine à l'étape 107. Si le message comprend au moins un contenu Ci, le procédé consiste à prélever la (ou les) méta-information(s) MCi associée(s) au contenu Ci à l'étape 103. Selon le procédé revendiqué, le procédé en 104 teste la concordance de MCi aux méta-informations MCE1 à MCEm décrivant les centres d'intérêt de l'utilisateur. S'il existe une concordance alors le procédé extrait en 105 le contenu Ci et le délivre en 106. Si par contre il n'existe aucune concordance, alors le procédé réalise une nouvelle itération en 101 pour examiner le contenu suivant.

L'opération 104 peut être matérialisée par un test d'égalité stricte entre une méta-information MCn caractérisant un contenu Cn et une méta-information MCEm caractérisant un centre d'intérêt. Il est possible d'effectuer en lieu et place un test de proximité ou de synonyme. Ainsi il est possible par exemple d'accepter et extraire un contenu dédié à un équipement de football (méta-information MCn = « football ») si une méta-information MCEn a la valeur « sport » ou « soccer ». D'autres tests de concordance ou proximité pourraient être mis en oeuvre à l'étape 104.

Grâce à l'invention, il est possible de remédier aux inconvénients des solutions existantes en privilégiant les campagnes larges, non ciblées tout en permettant à un utilisateur de ne percevoir (image, son...) que les contenus publicitaires relatifs à ses propres centres d'intérêts. L'impact de la publicité est donc maximisé.

L'invention n'est pas limitée à un téléchargement de données dans des cartes à puce du type SIM ou dans des terminaux radiotéléphoniques mobiles. Un objet selon l'invention peut être également une carte incluse dans un ordinateur portable relié à un terminal mobile, ou une carte de paiement ou toute autre carte additionnelle incluse dans un terminal mobile. Selon d'autres variantes, l'invention s'applique à d'autres objets électroniques communicants portables, tels que des assistants numériques personnels communicants PDA...

Dans d'autres variantes, l'objet est une carte à puce, un dongle, ou plus généralement un dispositif électronique mettant en oeuvre un procédé d'extraction selon l'invention. L'objet peut être mis en liaison avec un terminal (tel un PDA ou ordinateur portable ou téléphone) qui assure les fonctions de transmission vers l'objet des messages M comprenant des contenus publicitaires associés à des méta-informations MCn, d'activation de l'extraction au moyen de l'objet et de rendu visuel, sonore ou autre des contenus extraits par l'objet. Ce dernier extrait les contenus en fonction des méta-informations décrivant les centres d'intérêt de l'utilisateur. Préférentiellement un tel objet comprend des moyens pour mémoriser lesdites méta-informations MCEm. Ainsi l'utilisateur d'une pluralité de terminaux peut insérer dans ou plus généralement mettre en liaison son objet communicant avec lesdits terminaux et ne percevoir que les contenus publicitaires ciblés sur l'ensemble des terminaux. Chaque terminal diffuse une publicité ciblée à l'utilisateur au mieux de ses capacités via ses moyens consommateurs de contenus publicitaires. Ainsi un terminal peut selon ses capacités mettre en oeuvre un rendu autre que visuel ou sonore. Il est par exemple possible de réaliser un rendu tactile pour des utilisateurs non-voyants voire même olfactif ou même gustatif. Dans un autre mode de réalisation un tel terminal peut mémoriser une pluralité de messages M et transmettre ceux-ci à l'objet pour extraction à la demande.
Selon au autre exemple conforme à l'invention, l'objet communicant est une carte bancaire mise en liaison avec un terminal de paiement ou de retrait. La carte bancaire met en oeuvre dans cette variante le procédé d'extraction de contenus publicitaires à partir d'un ensemble de méta-informations caractérisant les centres d'intérêt de son porteur, méta-informations mémorisées dans la carte, le terminal de paiement recevant régulièrement de son opérateur des messages contenant de la publicité non ciblée. Lors d'une transaction de paiement ou de retrait, le porteur de la carte peut visualiser de la publicité ciblée via ledit terminal.

## Revendications

1. Objet électronique communicant (1a, 1b) adapté pour recevoir à travers un réseau de communication un message (M), ledit message comprenant au moins un contenu publicitaire (C1, C2, ..., Cn) et au moins une méta-information (MC1, MC2, ... MCn) associée au dit contenu publicitaire pour caractériser le sujet sur lequel porte le contenu publicitaire
**caractérisé en ce que** l'objet comporte :
- des moyens (10) pour exploiter au moins une méta-information préétablie (MCE1, MCE2, ..., MCEm) définissant un centre d'intérêt d'un utilisateur ;
- des moyens (10) pour extraire du message (M) un contenu publicitaire (C1, C3) si et seulement si une méta-information (MC1, MC3) caractérisant le contenu publicitaire correspond à une méta-information (MCE2, MCEm) définissant un centre d'intérêt de l'utilisateur.

2. Objet électronique (1a, 1b) selon la revendication 1 **caractérisé en ce qu'**il comprend en outre des moyens (11) pour mémoriser ladite au moins une méta-information (MCE1, MCE2, ..., MCEm) définissant un centre d'intérêt d'un utilisateur de l'objet et des moyens (10) pour accéder à ladite au moins une méta-information (MCE1, MCE2, ..., MCEm) mémorisée.

3. Objet électronique communicant (1a) selon la revendication 1 ou 2 **caractérisé en ce qu'**il consiste en un terminal mobile dans un réseau de radiotéléphonie.

4. Objet électronique communicant selon la revendication 1 ou 2 **caractérisé en ce qu'**il consiste en une carte SIM (1b) introduite dans terminal mobile dans un réseau de radiotéléphonie (1a).

5. Objet électronique selon la revendication 1 ou 2
**caractérisé en ce qu'**il consiste en un dispositif électronique (1b) mis en liaison avec un terminal (1a).

6. Objet électronique selon l'une quelconque des revendications 1 à 5 **caractérisé en ce qu'**il comporte en outre des moyens (12) pour établir ladite au moins une méta-information (MCE1, MCE2, ..., MCEm) définissant un centre d'intérêt de l'utilisateur.

7. Objet électronique selon la revendication 6 **caractérisé en ce que** les moyens (12) pour établir une méta-information (MCE1, MCE2, ..., MCEm) définissant un centre d'intérêt de l'utilisateur exploitent les caractéristiques de l'abonnement de l'utilisateur.

8. Objet électronique selon la revendication 6
**caractérisé en ce que** les moyens (12) pour établir une méta-information (MCE1, MCE2, ..., MCEm) définissant un centre d'intérêt de l'utilisateur exploitent les favoris définis par l'utilisateur durant les phases navigations de ce dernier au travers de menus mis à disposition par l'objet communicant.

9. Objet selon l'une quelconque des revendications 1 à 8 **caractérisé en ce qu'**il comporte en outre des moyens consommateurs (13) de contenus publicitaires pour activer les moyens (10) pour extraire un contenu publicitaire et **en ce que** lesdits moyens consommateurs (13) réalisent une fonction de rendu visuel, sonore, olfactif, tactile et/ou gustatif ou une fonction de mémorisation du contenu extrait.

10. Objet selon l'une quelconque des revendications 1 à 9 **caractérisé en ce qu'**il comporte en outre des moyens (14) pour mémoriser les messages (M) reçus par ledit objet.

11. Objet selon la revendication 10 **caractérisé en que** les moyens (10) pour extraire réalisent l'extraction d'un contenu publicitaire contenu dans un message (M) mémorisé.

12. Procédé d'extraction de contenus publicitaires délivrés sous la forme d'un message (M) comprenant au moins un contenu publicitaire (C1, C2, ..., Cn), au moins une méta-information (MC1, MC2, ... MCn) associé au contenu publicitaire pour caractériser le sujet sur lequel porte le contenu publicitaire
**caractérisé en ce que** le procédé comprend les étapes de
- récupérer (101, 102, 103, 104) une méta-information (MC1, MC2, ... MCn) d'un contenu publicitaire (C1, C2, ..., Cn) du message (M) ;
- comparer (105) ladite méta-information (MC1, MC2, ... MCn) à au moins une méta-information (MCE1, MCE2, ..., MCEm) définissant un centre d'intérêt d'un utilisateur ;
- extraire (106) du message (M) et ainsi délivrer (107) un contenu publicitaire (C1, C3) si et seulement si une méta-information (MC1, MC3) caractérisant le contenu publicitaire correspond à une méta-information (MCE2, MCEm) définissant un centre d'intérêt de l'utilisateur.

13. Procédé d'extraction selon la revendication 12
**caractérisé en ce qu'**il est mis en oeuvre par un objet électronique (1a, 1b) selon l'une quelconque des revendications 1 à 11.

14. Procédé pour élaborer un message (M) comprenant au moins un contenu publicitaire (C1, C2, ..., Cn)
**caractérisé en ce qu'**il comporte une étape d'ajouter au message au moins une méta-information (MC1, MC2, ... MCn) par contenu publicitaire pour caractériser le sujet sur lequel porte ledit contenu.
